# EUROPÄISCHE PATENTANMELDUNG

(11) **EP 1 876 427 A1**
(43) Veröffentlichungstag der Anmeldung: **09.01.2008**
(21) Anmeldenummer: 07011238.8
(22) Anmeldetag: 08.06.2007
(51) Int. Cl.: G01F 1/66

(54) **Ultraschall-durchflussmesser mit einer tubulatorkomponente im einlaufbereich**

(30) Priorität: 05.07.2006 DE 102006030942
(71) Anmelder: Landis+Gyr GmbH, 90459 Nürnberg (DE)
(72) Erfinder: Rother, Stephan, Dr. rer.nat., 90451 Nürnberg (DE)
(74) Vertreter: Bauerschmidt, Peter

(57) **Zusammenfassung**

Der Durchflussmesser (1) für ein strömendes Medium hat einen Einlaufbereich (6) und eine sich anschließende Durchflussmessstrecke (2), die in einem Gehäuse (5; 31) angeordnet sind. In den Einlaufbereich (6) ist eine Turbulatorkomponente (22) zur Erzeugung einer Turbulenz in dem strömenden Medium integriert. Die Turbulatorkomponente (22) umfasst mindestens eine gegen eine Strömungsrichtung (3) des strömenden Mediums um einen Verkippungswinkel (al) geneigte Verwirbelungswand (23), wodurch im Einlaufbereich (6) voneinander getrennte Teileinlaufkanäle gebildet sind.

## Beschreibung

Die Erfindung betrifft einen Durchflussmesser für ein strömendes Medium mit einem Einlaufbereich und einer sich anschließenden Durchflussmessstrecke, die in einem Gehäuse angeordnet sind.

Ein derartiger insbesondere als Ultraschalldurchflussmesser ausgebildeter Durchflussmesser kommt beispielsweise auch zur Wärmezählung zum Einsatz. In der DE 44 37 588 A1 ist ein Beispiel für einen solchen Ultraschall basierten Durchflussmesser beschrieben.

Während des Fertigungsprozesses erfolgt eine Abgleichung des Durchflussmessers üblicherweise anhand eines ungestörten Testströmungsprofils. Während des späteren Einsatzes in einem vom Medium durchströmten Rohrleitungssystem kann es vorkommen, dass der Durchflussmesser stromabwärts einer Störstelle, beispielsweise einer starken Rohrkrümmung oder eines nur teilweise geöffneten Kugelhahns oder Schiebers, eingebaut ist. Die Störstelle beeinflusst das Strömungsprofil, sodass der Durchflussmesser bei Strömungsverhältnissen betrieben wird, die sich sehr stark von denjenigen unterscheiden, auf die er ursprünglich abgeglichen worden ist. Es können Messfehler auftreten.

Bei dem in der DE 44 37 588 A1 beschriebenen Durchflussmesser ist im Einlaufbereich ein Drallblech vorgesehen, dass im strömenden Medium eine Strömungsberuhigung und/oder eine Drallbeseitigung bewirkt. Es gibt jedoch manche Strömungsverhältnisse, bei denen dieses Drallblech zu keiner ausreichenden Strömungsgleichrichtung führt.

Die Aufgabe der Erfindung besteht nun darin, einen Durchflussmesser der eingangs bezeichneten Art anzugeben, der auch bei gestörten Strömungsprofilen eine hohe Messgenauigkeit erlaubt.

Zur Lösung dieser Aufgabe wird ein Durchflussmesser entsprechend den Merkmalen des Patentanspruchs 1 angegeben. Bei dem erfindungsgemäßen Durchflussmesser ist in den Einlaufbereich eine Turbulatorkomponente integriert, die eine Turbulenz, insbesondere eine Turbulenz mit einer tangentialen Geschwindigkeitskomponente wie z.B. eine Verwirbelung und/oder einen Drall, in dem strömenden Medium erzeugt. Dazu umfasst die Turbulatorkomponente mindestens eine gegen eine Strömungsrichtung des strömenden Mediums um einen Verkippungswinkel geneigte Verwirbelungswand, wodurch im Einlaufbereich zumindest weitgehend voneinander getrennte Teileinlaufkanäle gebildet sind.

Bei dem erfindungsgemäßen Durchflussmesser wird vor der eigentlichen Durchflussmessstrecke aufgrund der Verkippung der Verwirbelungswand gezielt eine starke definierte Störung des Strömungsprofils hervorgerufen. Dies geschieht wegen der diesbezüglich sehr günstigen Neigung der Verwirbelungswand unabhängig von den eingangs des Einlaufbereichs herrschenden Strömungsverhältnissen.

Dort kann ein ungestörtes turbulentes Strömungsprofil mit einer - abgesehen vom unmittelbaren Wandbereich - über dem Rohrquerschnitt weitgehend gleich bleibenden Strömungsgeschwindigkeit, also mit einer in radialer Richtung praktisch konstanten Geschwindigkeitsverteilung, oder ein gestörtes laminares Strömungsprofil mit einer über dem Rohrquerschnitt variierenden Strömungsgeschwindigkeit oder ein Strömungsprofil mit einer beliebigen anderen Störung vorliegen. Die Turbulatorkomponente mit der geneigten Verwirbelungswand bewirkt stets die gleiche starke Störung der in die nachgeordnete Durchflussmessstrecke eintretenden Strömung. Der Durchflussmesser wird während der Fertigung genau auf diese bei allen Einsatzbedingungen weitgehend gleich bleibende definierte Strömungsstörung in der Durchflussmessstrecke abgeglichen. Demnach treten auch bei ungünstigen Einbaubedingungen keine Messfehler auf.

Vorteilhafterweise befindet sich die Turbulatorkomponente in Strömungsrichtung unmittelbar vor der Durchflussmessstrecke und insbesondere auch im gleichen Gehäuse wie die Durchflussmessstrecke. Dadurch wird verhindert, dass die gezielt hervorgerufene Strömungsstörung vor der Durchflussmessstrecke durch Fremdeinflüsse nochmals verändert wird oder aufgrund des natürlichen Ausgleichsbestrebens zumindest teilweise bereits wieder gleichgerichtet wird.

Vorteilhafte Ausgestaltungen des erfindungsgemäßen Durchflussmessers ergeben sich aus den Merkmalen der von Anspruch 1 abhängigen Ansprüche.

Günstig ist eine Variante, bei der die Turbulatorkomponente in einer im Wesentlichen eine gleich bleibende Querschnittsfläche aufweisenden Vorlaufzone des Einlaufbereichs angeordnet ist. Dort lässt sich die Turbulatorkomponente sehr gut und einfach einbauen.

Weiterhin kann die Turbulatorkomponente vorzugsweise in einer sich verjüngenden Übergangszone des Einlaufbereichs angeordnet sein. Dadurch resultiert eine sehr kompakte Bauform. Die Übergangszone ist meistens ohnehin vorhanden. Die Unterbringung der Turbulatorkomponente in dieser Zone vergrößert die äußeren Abmessungen des Durchflussmessers nicht. Außerdem kann in der Übergangszone insbesondere auch eine Querschnittsveränderung von einer runden auf eine rechteckige Strömungsquerschnittsfläche vorgesehen sein. Die Turbulatorkomponente lässt sich auch in eine so ausgestaltete Übergangszone problemlos einbauen.

Gemäß einer anderen vorteilhaften Variante sind mehrere gegen die Strömungsrichtung geneigte Verwirbelungswände vorgesehen und zumindest ein Teil der Verwirbelungswände ist in Strömungsrichtung in sich verwunden. Dadurch lässt sich die Turbulatorkomponente besonders gut an eine Übergangszone des Einlaufbereichs mit einer Änderung von rundem auf rechteckigen Querschnitt anpassen.

Vorzugsweise sind weiterhin Flächenverhältnisse von senkrecht zur Strömungsrichtung angeordneten Querschnittsflächen der Teileinlaufkanäle an einem in Strömungsrichtung gesehenen Eingang der Turbulatorkomponente und an einem Ausgang der Turbulatorkomponente sowie insbesondere auch an jeder anderen Stelle in Strömungsrichtung gleich. Dadurch wird ein Düseneffekt vermieden. Die gleichen Flächenverhältnisse gelten insbesondere für äußere Teileinlaufkanäle, die radial außen, also an eine Wand des Einlaufbereichs angrenzend, und in Umfangsrichtung nebeneinander und angeordnet sind. Grundsätzlich kann aber auch ein zentraler, d.h. insbesondere ein eine Mittenlängsachse der Turbulatorkomponente konzentrisch umgebender Teileinlaufkanal mit einbezogen sein und ebenfalls die genannte Bedingung für die Flächenverhältnisse erfüllen. Vorteilhafterweise haben zumindest die äußeren, insbesondere sogar alle Teileinlaufkanäle senkrecht zur Strömungsrichtung orientierte Querschnittsflächen mit jeweils gleichem Flächeninhalt. Dies gilt vorzugsweise am Ein- und/oder Ausgang der Turbulatorkomponente, aber insbesondere auch an jeder anderen Stelle in Strömungsrichtung.

Bei einer anderen bevorzugten Ausgestaltung liegt der Verkippungswinkel in einem Winkelbereich zwischen 8° und 20°. Damit ist zum einen die definierte starke Strömungsstörung zu erreichen. Zum anderen ist der durch die Turbulatorkomponente verursachte Druckabfall noch nicht zu groß.

Günstig ist weiterhin eine Variante, bei der mehrere gegen die Strömungsrichtung geneigte Verwirbelungswände vorgesehen sind, die sich im Bereich einer Mittenachse der Turbulatorkomponente schneiden. Durch mehrere derartige Wände kann die Verwirbelungswirkung gesteigert werden.

Vorzugsweise weist die Turbulatorkomponente außerdem einen konzentrisch um eine Mittenachse angeordneten zentralen Teileinlaufkanal in Form eines Hohlzylinders oder eines Hohlkonus auf. Dies stabilisiert den mechanischen Aufbau der Turbulatorkomponente.

Darüber hinaus ist die Querschnittsfläche des zentralen Teileinlaufkanals insbesondere kleiner als die Querschnittsflächen der übrigen Teileinlaufkanäle. Der zentrale Teileinlaufkanal leistet keinen nennenswerten Beitrag zur Strömungsstörung. Er dient hauptsächlich der mechanischen Stabilisierung. Somit ist es günstig, wenn nur ein vergleichsweise geringer Teil des Mediums durch ihn hindurch fließt.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: ein Ausführungsbeispiel eines Durchflussmessers mit einer in eine Vorlaufzone eines Einlaufbereichs integrierten Turbulatorkomponente in Längsschnittdarstellung,
- Fig. 2: die Vorlaufzone mit der integrierten Turbulatorkomponente in Darstellung des Querschnitts II - II gemäß Fig. 1,
- Fig. 3: ein Ausführungsbeispiel eines Durchflussmessers mit einer in eine Übergangszone eines Einlaufbereichs integrierten Turbulatorkomponente in Längsschnittdarstellung,
- Fig. 4 und 5: ein Ausführungsbeispiel eines Gehäuses für den Durchflussmesser gemäß Fig. 3 in perspektivischen Sichten, und
- Fig. 6 und 7: ein Ausführungsbeispiel einer in das Gehäuse gemäß Fig. 4 und 5 einsetzbaren Turbulatorkomponente in perspektivischer Front- bzw. Seitenansicht.

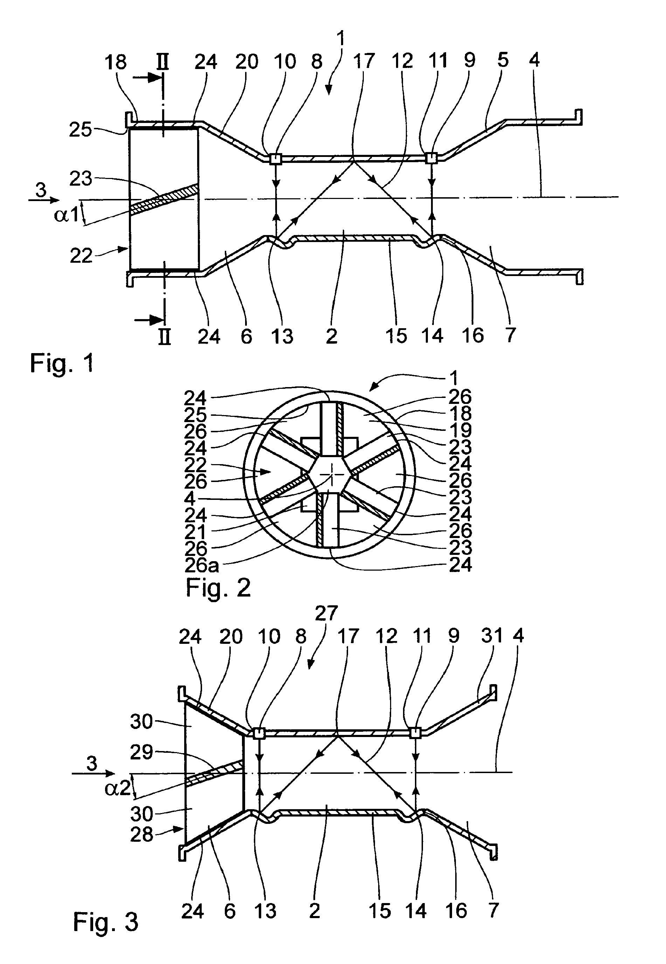

Einander entsprechende Teile sind in den Fig. 1 bis 7 mit denselben Bezugszeichen versehen.

In Fig. 1 ist ein Ausführungsbeispiel eines Ultraschall basierten Durchflussmessers 1 mit einer Durchflussmessstrecke 2, die von einem zu erfassenden Medium in einer Strömungsrichtung 3 durchströmt wird, gezeigt. Die Strömungsrichtung 3 ist im Wesentlichen parallel zu einer Mittenlängsachse 4 des Durchflussmessers 1 orientiert. Neben der Durchflussmessstrecke 2 ist in einem gemeinsamen Gehäuse 5 des Durchflussmessers 1 auch ein der Durchflussmessstrecke 2 in Strömungsrichtung 3 vorgelagerter Einlaufbereich 6 sowie ein der Durchflussmessstrecke 2 in Strömungsrichtung 3 nachgelagerter Auslaufbereich 7 untergebracht. Das Gehäuse 5 ist gesondert zu dem nicht näher gezeigten Rohrsystem ausgebildet, in dem sich das Medium ansonsten ausbreitet. Bei dem Rohrsystem kann es sich beispielsweise um einen Heiz- oder Wasserkreislauf handeln.

Die Durchflussmessstrecke 2 enthält zwei Ultraschallwandler 8 und 9, die in Wandlerbohrungen 10 bzw. 11 des Gehäuses 5 eingesetzt sind. Die Ultraschallwandler 8 und 9 stehen akustisch mittels eines innerhalb des zu erfassenden Mediums verlaufenden, insbesondere bidirektionalen Schallpfads 12 miteinander in Verbindung. Der Schallpfad 12 umfasst zwei Reflektionsstellen 13 und 14 an einem Reflexionseinsatz 15. Letzterer befindet sich in einer Längsöffnung 16 an einer den Ultraschallwandler 8 und 9 gegenüberliegenden Wand des Gehäuses 5. Außerdem hat der Schallpfad 12 eine weitere Reflektionsstellen 17, die etwa in der Mitte zwischen den Ultraschallwandlern 8 und 9 angeordnet ist. Grundsätzlich kann zwischen den beiden Ultraschallwandlern 8 und 9 aber auch ein anderer Schallpfad vorgesehen sein. Außerdem kann die Schallumlenkung auch mittels in die Durchflussmessstrecke 2 eingehängter Reflektoren erfolgen.

Der Einlaufbereich 6 hat eine Vorlaufzone 18 mit einer runden Strömungsquerschnittsfläche 19 und eine sich daran anschließende Übergangszone 20, in der ein Wechsel von der runden Strömungsquerschnittsfläche 19 der Vorlaufzone 18 auf eine rechteckige Strömungsquerschnittsfläche 21 der Durchflussmessstrecke 2 stattfindet.

In der Vorlaufzone 18 ist eine Turbulatorkomponente 22 angeordnet, die im Ausführungsbeispiel insgesamt sechs dünne Verwirbelungswände 23 aufweist. In Fig. 1 ist wegen einer übersichtlicheren Darstellung schematisch nur eine der Verwirbelungswände 23 gezeigt. Alle sechs Verwirbelungswände 23 sind dagegen aus der Querschnittsdarstellung gemäß Fig. 2 ersichtlich. Die Verwirbelungswände 23 sind in Umfangsrichtung jeweils gegeneinander um etwa 60° versetzt angeordnet. Gegenüber der Strömungsrichtung 3 und der Mittenlängsachse 4 sind sie jeweils um einen Verkippungswinkel α1 geneigt, der im Ausführungsbeispiel 12° beträgt.

Beide Verkippungsrichtungen sind möglich. Der Verkippung besteht insbesondere auch gegenüber einer Hauptströmungsrichtung des Mediums innerhalb der Turbulatorkomponente 22. Dabei ist die Hauptströmungsrichtung innerhalb der Turbulatorkomponente 22 gleich der übergeordneten Strömungsrichtung 3 durch den Durchflussmesser 1 und insbesondere auch durch die Durchflussmessstrecke 2.

Die Verwirbelungswände 23 reichen jeweils an einer ihre beiden Schmalseiten 24 bis an eine Innenwand 25 des Einlaufbereichs 6. Sie können dort entweder in oder an der Innenwand 25 befestigt sein, beispielsweise mittels einer Klebe-, Steck- oder Schweißverbindung. Ebenso kann die Turbulatorkomponente 22 im Bereich der Innenwand 25 einen äußeren in Umfangsrichtung umlaufenden Befestigungsring aufweisen, an dem die Verwirbelungswände 23 angebracht sind.

Mit ihrer zweiten von der Innenwand abgewandten Schmalseite erstrecken sich die Verwirbelungswände 23 radial nach innen, also in Richtung der Mittenlängsachse 4. Sie enden jeweils ein Stück vor der Mittenlängsachse 4. So ist im Zentrum um die Mittenlängsachse 4 ein zentraler Teileinlaufkanal 26a gebildet. Daneben gibt es insgesamt sechs äußere Teileinlaufkanäle 26, die jeweils zwischen zwei benachbarten Verwirbelungswänden 23 verlaufen. Im Ausführungsbeispiel sind die äußeren Teileinlaufkanäle 26 offen zum zentralen Teileinlaufkanal 26a. Ebenso kann aber eine Trennwand, beispielsweise in Gestalt eines Zylinderrohres, vorgesehen sein, die den zentralen Teileinlaufkanal 26a umgibt und von den äußeren Teileinlaufkanälen 26 abtrennt.

Auch bei der offenen Ausführungsform gemäß Fig. 1 und 2 sind die Teileinlaufkanäle 26 dennoch im Wesentlichen voneinander getrennt - zumindest funktionell. Über den zentralen Teileinlaufkanal 26a findet praktisch kein Austausch des strömenden Mediums von einem Teileinlaufkanal 26 zum anderen statt.

Die in den Durchflussmesser 1 integrierte Turbulatorkomponente 22 mit den geneigten Verwirbelungswänden 23 bewirkt in den äußeren Teileinlaufkanälen 26 eine gezielte Störung des strömenden Mediums, sodass unabhängig von den eingangs des Einlaufbereichs 6 herrschenden Strömungsverhältnissen in der Durchflussmessstrecke 2 stets ein in etwa gleiches gestörtes Strömungsprofil gegeben ist. Letzteres weist insbesondere gezielt eingebrachte Turbulenzen mit tangentialen Geschwindigkeitskomponenten auf. Innerhalb der Durchflussmessstrecke 2 strömt das zu erfassende Medium dann also mit einem Drall und/oder es weist eine Verwirbelung auf. Je nach Verkippungsrichtung der Verwirbelungswände 23 wird ein Drall im oder gegen den Uhrzeigersinn erzeugt. Auf diese stets in etwa gleich bleibenden gestörten Strömungsverhältnisse innerhalb der Durchflussmessstrecke 2 wird der Durchflussmesser 1, insbesondere dessen nicht explizit dargestellte Auswerteeinheit, abgeglichen.

Bei alternativen nicht gezeigten Ausführungsbeispielen können auch andere Anzahlen an Verwirbelungswänden 23, beispielsweise vier oder acht, vorgesehen sein. Möglich sind auch nur zwei in Umfangsrichtung um 180° gegeneinander versetzte Verwirbelungswände 23. Bei vier Verwirbelungswänden 23 beträgt der Umfangsversatz jeweils 90°. Die Verwirbelungswände 23 sind also insbesondere gleichmäßig über den Umfang verteilt angeordnet. Bei allen Ausführungsformen ist eine Neigung der Verwirbelungswände 23 gegen die Strömungsrichtung 3 vorgesehen.

In Fig. 3 ist ein Ausführungsbeispiel eines weiteren Ultraschall basierten Durchflussmessers 27 mit der Durchflussmessstrecke 2 gezeigt. Eine Turbulatorkomponente 28 ist in die Übergangszone 20 des Einlaufbereichs 6 integriert.

Im Gegensatz zum Durchflussmesser 1 gemäß Fig. 1 und 2, bei dem die Turbulatorkomponente 22 in der Vorlaufzone 18 mit einer in Strömungsrichtung 3 gleich bleibenden Querschnittsfläche angeordnet ist, befindet sich die Turbulatorkomponente 28 des Durchflussmessers 27 gemäß Fig. 3 in der Übergangszone 20, deren Querschnittsfläche sich verjüngt. Außerdem erfolgt in der Übergangszone 20 der Übergang von der eingangs runden Strömungsquerschnittsfläche 19 auf die in der Durchflussmessstrecke 2 rechteckige Strömungsquerschnittsfläche 21.

Auch die Turbulatorkomponente 28 hat sechs Verwirbelungswände 29, deren Abmessungen und Konturen so angepasst sind, dass die einen Schmalseiten 24 wiederum jeweils bis an die Innenwand 25 heranreichen. Es sind wieder sechs funktionell voneinander getrennte Teileinlaufkanäle 30 gebildet.

Gegenüber der Strömungsrichtung 3 und der Mittenlängsachse 4 sind die Verwirbelungswände 29 jeweils um einen Verkippungswinkel α2 geneigt, der bei dem in Fig. 3 gezeigten Ausführungsbeispiel 15° beträgt. In der Durchflussmessstrecke 2 ergibt sich also wieder das günstige vordefinierte und vor allem auch bei verschiedenen Betriebs- und/oder Einbaubedingungen praktisch gleich bleibende gestörte Strömungsprofil mit mindestens einer tangentialen Strömungsgeschwindigkeitskomponente, auf das der Durchflussmesser 27 vorab abgeglichen werden kann.

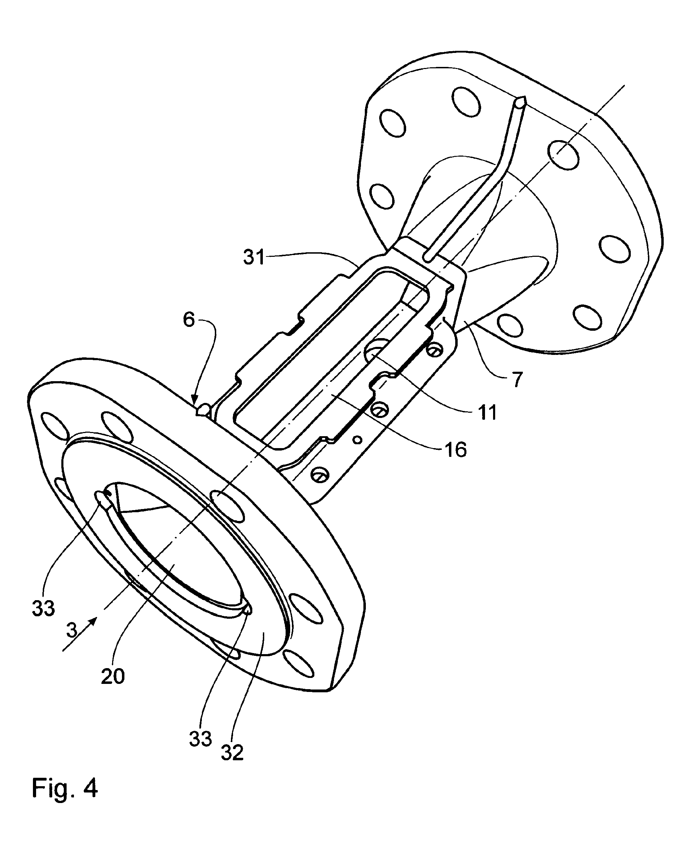

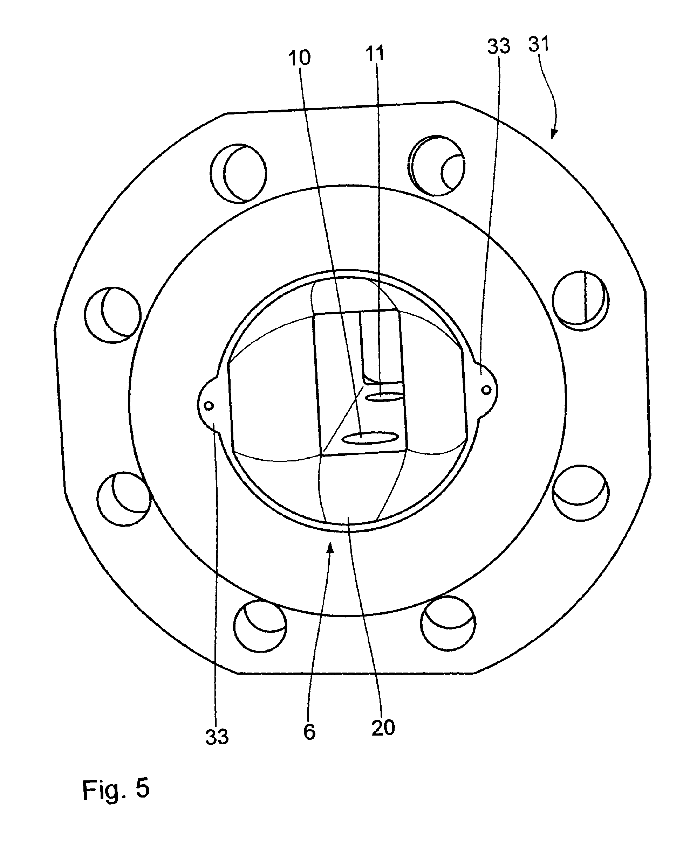

In Fig. 4 und 5 ist ein Ausführungsbeispiel eines Gehäuses 31 für den Durchflussmesser 27 gemäß Fig. 3 in einer perspektivisch Sicht von schräg unten bzw. in einer perspektivischen Frontansicht gezeigt.

An einem in Strömungsrichtung 3 vorderen Rand 32 des Einlaufbereichs 6 sind zwei Befestigungsausnehmungen 33 zur Montage der in die Übergangszone 20 einsetzbaren Turbulatorkomponente 28 vorgesehen. Die Turbulatorkomponente 28 umfasst korrespondierende Befestigungslaschen 34, die in die Befestigungsausnehmungen 33 platziert und dort mittels Schrauben befestigt werden können. Die Turbulatorkomponenten 22 und 28 lassen sich aber auch auf andere Weise in dem jeweils zugehörigen Durchflussmesser 1 bzw. 27 montieren und fixieren. Denkbar sind auch Stemm-, Klebe- und Schweißverbindungen.

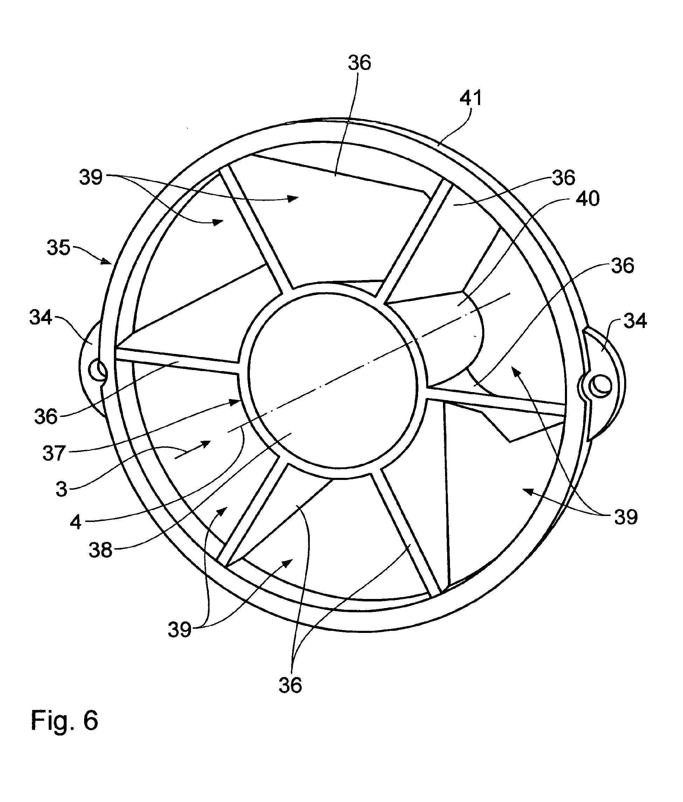

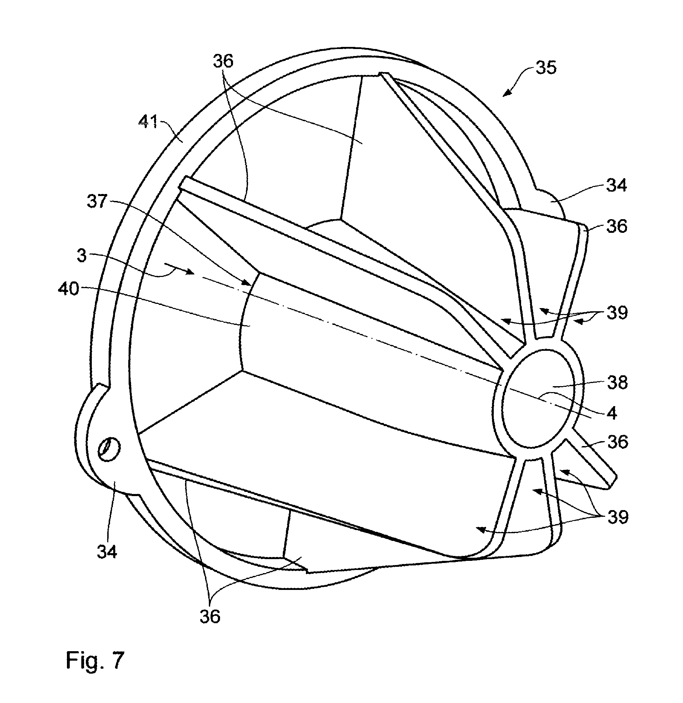

In Fig. 6 und 7 ist ein anderes Ausführungsbeispiel einer in das Gehäuse 31 gemäß Fig. 4 und 5 einsetzbaren Turbulatorkomponente 35 in perspektivischer Front- bzw. Seitenansicht gezeigt.

Im Unterschied zu den Turbulatorkomponenten 22 und 28 gemäß Fig. 1 bis 3 hat die Turbulatorkomponente 35 sechs gegen die Strömungsrichtung 3 und die Mittenlängsachse 4 mit einem Verkippungswinkel geneigte Verwirbelungswände 36 sowie außerdem einen zentralen Hohlkonus 37, dessen Hohlraum einen zentralen Teileinlaufkanal 38 bildet. Letzterer ist im montierten Zustand von sechs äußeren Teileinlaufkanälen 39 umgeben, die durch die Verwirbelungswände 36, eine Außenwand 40 des Hohlkonus 37 und die Innenwand 25 der Übergangszone 20 begrenzt sind.

Die sechs Verwirbelungswände 36 sind sowohl am zentral angeordneten Hohlkonus 37 als auch an einem eingangs der Turbulatorkomponente 35 vorgesehenen äußeren Stabilisierungsring 41 befestigt. Dadurch wird eine hohe mechanische Stabilität erreicht. Die Befestigungslaschen 34 sind an den äußeren Stabilisierungsring 41 angeformt. Die Turbulatorkomponente 35 ist einstückig ausgebildet. Bei einem alternativ ebenfalls möglichen mehrstückigen Aufbau sind die Einzelteile fest zusammengefügt, beispielsweise mittels einer Klemm-, Klebe- oder Schweißverbindung.

Zur Anpassung an den Übergang von der eingangs runden Strömungsquerschnittsfläche 19 auf die in der Durchflussmessstrecke 2 vorliegende rechteckige Strömungsquerschnittsfläche 21 sind die Verwirbelungswände 36 zumindest teilweise in sich verwunden. Diese neben den Verkippungen gegenüber der Strömungsrichtung 3 zusätzlich vorgesehenen Verwindungen führen auch dazu, dass die eingangs der Turbulatorkomponente 35 in Umfangsrichtung gleichmäßig verteilten, also im Ausführungsbeispiel jeweils um 60° in Umfangsrichtung gegeneinander versetzten Verwirbelungswände 36 ausgangs der Turbulatorkomponente 35 in Umfangsrichtung ungleichmäßig verteilt sind.

Diese ausgangseitig ungleichmäßige Anordnung geht aus der Darstellung gemäß Fig. 7 hervor. Die Anpassung an die rechteckige Strömungsquerschnittsfläche 21 ist gut ersichtlich. Der Verkippungswinkel bezeichnet dabei eine mittlere Verkippung der Verwirbelungswände 36 gegen die Strömungsrichtung 3. Die Mittelung ist aufgrund der zusätzlichen Verwindungen der Verwirbelungswände 36 erforderlich.

## Patentansprüche

1. Durchflussmesser für ein strömendes Medium mit einem Einlaufbereich (6) und einer sich anschließenden Durchflussmessstrecke (2), die in einem Gehäuse (5; 31) angeordnet sind, wobei
a) in den Einlaufbereich (6) eine Turbulatorkomponente (22; 28; 35) zur Erzeugung einer Turbulenz in dem strömenden Medium integriert ist,
und
b) die Turbulatorkomponente (22; 28; 35) mindestens eine gegen eine Strömungsrichtung (3) des strömenden Mediums um einen Verkippungswinkel (α1, α2) geneigte Verwirbelungswand (23; 29; 36) umfasst, wodurch im Einlaufbereich (6) zumindest weitgehend voneinander getrennte Teileinlaufkanäle (26; 30; 39) gebildet sind.

2. Durchflussmesser nach Anspruch 1, **dadurch gekennzeichnet, dass** die Turbulatorkomponente (22) in einer eine gleich bleibende Querschnittsfläche aufweisenden Vorlaufzone (18) des Einlaufbereichs (6) angeordnet ist.

3. Durchflussmesser nach Anspruch 1, **dadurch gekennzeichnet, dass** die Turbulatorkomponente (28; 35) in einer sich verjüngenden Übergangszone (20) des Einlaufbereichs (6) angeordnet ist.

4. Durchflussmesser nach Anspruch 3, **dadurch gekennzeichnet, dass** in der Übergangszone (20) eine Querschnittsveränderung von einer runden auf eine rechteckige Strömungsquerschnittsfläche (19, 21) vorgesehen ist.

5. Durchflussmesser nach Anspruch 1, **dadurch gekennzeichnet, dass** mehrere gegen die Strömungsrichtung (3) geneigte Verwirbelungswände (36) vorgesehen sind, und zumindest ein Teil der Verwirbelungswände (36) in Strömungsrichtung (3) in sich verwunden ist.

6. Durchflussmesser nach Anspruch 1, **dadurch gekennzeichnet, dass** Flächenverhältnisse von senkrecht zur Strömungsrichtung (3) angeordneten Querschnittsflächen der Teileinlaufkanäle (26; 30; 39) an einem in Strömungsrichtung gesehenen Eingang der Turbulatorkomponente (22; 28; 35) und an einem Ausgang der Turbulatorkomponente (22; 28; 35) gleich sind.

7. Durchflussmesser nach Anspruch 1, **dadurch gekennzeichnet, dass** der Verkippungswinkel (α1, α2) in einem Winkelbereich zwischen 8° und 20° liegt.

8. Durchflussmesser nach Anspruch 1, **dadurch gekennzeichnet, dass** mehrere gegen die Strömungsrichtung (3) geneigte Verwirbelungswände (23; 29) vorgesehen sind, die sich im Bereich einer Mittenachse (4) der Turbulatorkomponente (22; 28) schneiden.

9. Durchflussmesser nach Anspruch 1, **dadurch gekennzeichnet, dass** die Turbulatorkomponente (35) einen konzentrisch um eine Mittenachse (4) angeordneten zentralen Teileinlaufkanal (38) in Form eines Hohlzylinders oder eines Hohlkonus (37) aufweist.

10. Durchflussmesser nach Anspruch 9, **dadurch gekennzeichnet, dass** die Querschnittsfläche des zentralen Teileinlaufkanals (38) kleiner ist als die Querschnittsflächen der übrigen Teileinlaufkanäle (39).
